# EUROPEAN PATENT APPLICATION

(11) **EP 2 713 568 A1**
(43) Date of publication of application: **02.04.2014**
(21) Application number: 12306171.5
(22) Date of filing: 27.09.2012
(51) Int. Cl.: H04L 12/705, H04L 12/707, H04L 12/703, H04L 12/721

(54) **Label-switched ring network providing a virtual private LAN service**

(71) Applicant: Alcatel Lucent, 75007 Paris (FR)
(72) Inventor: Addeo, Christian, 33170 Pordenone (IT); Busi, Italo, 20023 Cerro Maggiore Mi (IT)
(74) Representative: Pietra, Giulia

(57) **Abstract**

It is disclosed a label-switched ring network configured to provide a virtual private LAN service. The label-switched ring network comprises a number of nodes. At least three of these nodes are provided with respective virtual switch instances (VSI) associated to the virtual private LAN service. At least two concatenated pseudowires are provided in the network for connecting the virtual switch instances according to a daisy-chain configuration. All the concatenated pseudowires have associated a same pseudowire label value. This allows properly implementing a wrapping protection scheme in case of a failure affecting a node comprising an intermediate VSI of the service, which "splits" the daisy chain of pseudowires.

## Description

### Technical field

The present invention relates to the field of communication networks. In particular, the present invention relates to a label-switched ring communication network (in particular, but not exclusively, an MPLS or MPLS-TP ring network) providing a virtual private LAN (Local Area Network) service.

### Background art

As known, in a packet-switched communication network user traffic flows are divided into packets which are routed through the network along paths comprising nodes connected by links.

In an MPLS (Multi-Protocol Label Switching) or MPLS-TP (MPLS Transport Profile) network, as defined by the IETF RFC 3031 (January 2001), a path along which packets carrying a given user traffic flow are transmitted is called Label Switched Path (briefly, LSP).

Each MPLS packet comprises a header, in turn comprising at least one LSP label. The LSP label of MPLS packets to be transmitted along a certain LSP has a value which uniquely identifies that LSP. Each intermediate node of the LSP determines the next hop to which the received MPLS packets shall be forwarded based on the value of their LSP label(s). Each intermediate node also typically performs a so-called "label swapping", namely it replaces the LSP label value of the received MPLS packets with a further LSP label value, which is also associated to the same LSP.

MPLS and MPLS-TP networks may support emulation of Layer 2 services, such as for instance Ethernet virtual private LAN services (VPLS), as defined by the IETF RFC 4762 (January 2007). Layer 2 packets (e.g. Ethernet packets) carrying user traffic of a given VPLS service are encapsulated in a so-called "pseudowire" (in brief, PW) which is transmitted through the MPLS network over an LSP. Each PW is associated to a PW label whose value uniquely identifies it.

Implementing a VPLS service in an MPLS or MPLS-TP network requires providing a virtual switch instance (in brief, VSI) at each node of the MPLS network to which one or more users of the VPLS service are connected. A VSI basically is a module configured to associate MAC addresses of Ethernet packets with PW labels. Then, typically, a full mesh of PWs connecting the various VSIs is provided.

When a user of a VPLS service wishes to transmit Ethernet packets to one or more destination users, the VSI implemented at the node to which the user is connected creates a number of copies of each Ethernet packet (one for each node to which one or more destination users are connected). Then, the VSI encapsulates each copy of the Ethernet packet in a respective MPLS packet by adding PW label and LSP label. The VSI then transmits each MPLS packet on a respective LSP. Along each LSP, the intermediate nodes transparently forward the MPLS packet based on its LSP label, namely without processing the PW label, and perform label swapping. Finally, the VSI terminating the PW extracts the Ethernet packet from the MPLS packet by removing LSP label and PW label and forwards the Ethernet packet to the destination user(s) connected to that VSI. In order to avoid a loop at the Ethernet layer, according to a so called "split-horizon rule", the forwarding of Ethernet packets received from a PW toward another PW is forbidden.

In MPLS or MPLS-TP networks having a ring topology, the above known implementation of VPLS services may lead to an inefficient use of the bandwidth of the links, especially in case of point-to-multipoint VPLS services (e.g. E-Tree services) and multipoint-to-multipoint VPLS services (e.g. E-LAN services). Indeed, in a MPLS or MPLS-TP ring network, PWs associated to a same VPLS service may partially overlap, namely they may share one or more links of the ring network. As a result, the shared link(s) of the MPLS or MPLS-TP ring network needlessly transmit different MPLS packets containing different copies of a same Ethernet packet.

In order to obviate this drawback and improve the bandwidth usage efficiency in MPLS and MPLS-TP ring networks, it is known implementing point-to-multipoint or multipoint-to-multipoint VPLS services using a daisy chain hierarchical configuration, called daisy-chain H-VPLS, namely: instead of providing a full mesh of PWs connecting the VSIs, a daisy-chain of concatenated PWs is provided around the ring, each PW connecting two adjacent VSls (namely, a VSI and the first VSI which is encountered starting from the VSI and running along the ring in either the clockwise or counterclockwise direction), the above mentioned split-horizon rule being not applied between concatenated PWs. Each VSI receiving from a PW an MPLS packet containing an Ethernet packet, extracts the Ethernet packet and forwards it to the destination user connected to the node at which the VSI resides. The VSI further creates a copy of the Ethernet packet, encapsulates it in an MPLS packet and forwards it on the subsequent PW. Hence, each link of the ring advantageously transmits a single copy of each Ethernet packet.

Protection mechanisms allowing to protect user traffic carried in an MPLS or MPLS-TP ring network against possible link or node failures are known.

The Internet-Draft "MPLS-TP Ring Protection Switching (MRPS), draft-helvoort-mpls-tp-ring-protection-switching-02.txt" (April 7, 2012) defines an MPLS-TP Ring Protection Switching (in brief, MRPS) mechanism allowing to protect user traffic transmitted over an MPLS-TP ring network. In particular, the network comprises two counter-rotating rings, namely a clockwise ring and a counterclockwise ring. The bandwidth of each ring is divided into a working bandwidth dedicated to working LSPs and a protection bandwidth dedicated to protection LSPs. The protection LSP(s) of one ring may be used to protect working LSP(s) of the other ring in case of failure.

In particular, it is known providing a single, circular bidirectional protection path shared among all the working LSPs allocated in the ring network. Such circular bidirectional protection path comprises two counter-rotating unidirectional circular protection LSPs, which are permanently provisioned and are accordingly unused in normal operative conditions. In case of a link or node failure, traffic transmitted by the affected working LSP(s) may be switched to any of the protection LSP, e.g. according to a wrapping protection scheme.

According to the wrapping protection scheme, in an exemplary case of a unidirectional failure affecting a link of the clockwise ring, the node immediately upstream the failed link switches all the MPLS packets coming from working LSP(s) allocated on the clockwise ring and directed to the failed link to the protection LSP allocated on the counterclockwise ring. These packets travel along the protection LSP allocated on the counterclockwise ring until they reach the node immediately downstream the failed link (according to the original traffic direction before the failure). Then, this node switches such packets back to their working LSP(s) allocated on the clockwise ring.

### Summary of the invention

The inventors have perceived that it is desirable providing an MPLS or MPLS-TP ring network supporting VPLS services using daisy-chained PWs and, at the same time, implementing an MRPS mechanism based on a wrapping protection scheme which uses a shared circular protection path.

Indeed, as explained above, daisy-chain of PWs allow maximizing the bandwidth usage efficiency of the links. Besides, the shared circular protection path is a highly scalable solution, which provides good performance in terms of traffic restoration time (less than 50 msec).

However, the inventors have noticed that protecting a daisy chain of PWs supporting a VPLS service with the MRPS mechanism gives raise to some drawbacks, as it will be described in detail herein after.

It is assumed that an MPLS or MPLS-TP ring network comprises a number of nodes connected by first links forming a clockwise ring and second links forming a counterclockwise ring. Some of the nodes are provided with respective VSIs supporting a given VPLS service, whereas a daisy chain of PWs is allocated on the clockwise ring for connecting the VSIs (only the clockwise direction will be considered). Each PW of the daisy-chain has a respective PW label value and is mapped in a corresponding working LSP allocated on the clockwise ring. Each LSP has associated a respective set of LSP label values (one for each hop). The LSP label values and the PW label values are typically selected by the network operator with the only constraint that each label value shall not be repeated in the communication network.

It is further assumed that the MPLS or MPLS-TP ring network comprises a circular protection LSP allocated on the counterclockwise ring, which provides a shared protection to all the working LSPs allocated on the clockwise ring, including the LSPs supporting the VPLS service. The protection LSP has associated a set of protection LSP label values (one for each hop).

It is now assumed that a failure affects one of the links of the clockwise ring comprised in one of the concatenated PWs.

As the node located immediately upstream the failed link becomes aware of the failure, it preferably encapsulates the MPLS packets received from the incoming PW by adding (externally to the LSP label and PW label already comprised therein) a protection LSP label whose value is associated to the first hop of the protection LSP, and switches the encapsulated MPLS packets to the protection LSP on the counterclockwise ring. The intermediate nodes of the protection LSP transparently forward the encapsulated MPLS packets based on their protection LSP label and perform label swapping of the protection LSP label. When the encapsulated MPLS packets are received at the node immediately downstream the failed link, such node extracts the MPLS packets from the protection LSP by removing the protection LSP label and switches the MPLS packets back to the original working LSP. Hence, clockwise connectivity between the VSIs is restored.

If however a failure occurs at one of the nodes at which an intermediate VSI is provided (namely, a VSI at which two consecutive PWs are concatenated), the failure "splits" the PW daisy-chain and prevents the communication network from restoring the clockwise connectivity between VSI(s) upstream the failed node and VSI(s) downstream the failed node.

Indeed, in such failure scenario, as the node located immediately upstream the failed node becomes aware of the failure, it preferably encapsulates the MPLS packets received from the incoming PW in the protection LSP, as explained above. The node located immediately downstream the failed node receives the encapsulated MPLS packets from the protection LSP and extracts the MPLS packets therefrom.

However, disadvantageously, this node does not know how to continue the processing of such MPLS packets. Indeed, the extracted MPLS packets contain an LSP label and a PW label identifying an LSP and a PW which are allocated upstream the failed node, and which are accordingly not configured at the node located immediately downstream the failed node. In other words, the value of the LSP label and PW label comprised in such MPLS packets is unknown to the node extracting them from the protection LSP, which accordingly discards them. Hence, even if the wrapping protection scheme is in principle capable of providing in the ring network a physical path connecting the VSI(s) located upstream the failed node with the VSI(s) located downstream the failed node, the nodes of the network are not capable of properly routing the MPLS packets along such path.

In view of the above, the Applicant has faced the problem of providing a label-switched ring network (in particular, but not exclusively, an MPLS or MPLS-TP ring network) providing a VPLS service which overcomes the aforesaid drawback, namely which - in case of a node failure affecting a node at which an intermediate virtual switch instance of the VPLS service is provided - is capable of restoring connectivity among all the other virtual switch instances.

In the present description and in the claims, the expression "intermediate virtual switch instance" will designate a virtual switch instance linking two consecutive PWs of a PW daisy-chain supporting a VPLS service.

Further, in the present description and in the claims, the expression "end virtual switch instance" will designate a virtual switch instance which terminates/originates a single PW of a PW daisy-chain supporting a VPLS service.

According to an aspect thereof, the present invention provides a label-switched ring network configured to provide a virtual private LAN service, the label-switched ring network comprising:
- a number of nodes, at least three nodes of the number of nodes being provided with respective virtual switch instances associated to the virtual private LAN service; and
- at least two concatenated pseudowires for connecting the virtual switch instances along a first direction of the ring network according to a daisy-chain configuration, the at least two concatenated pseudowires having associated a same pseudowire label value.

Preferably, the label-switched ring network further comprises at least two concatenated label-switched paths suitable for supporting transmission of the at least two pseudowires, each hop of each one of the at least two label-switched paths having associated a same path label value.

Preferably, the path label value is different from the pseudowire label value.

According to preferred embodiments, the virtual switch instances comprise two end virtual switch instances and at least one intermediate virtual switch instance of the virtual private LAN service.

Preferably, at least one of the two end virtual switch instances is configured to:
- receive layer 2 packets from an originating user of the virtual private LAN service, encapsulate each one of the layer 2 packets by adding a pseudowire label having the pseudowire label value and transmit the encapsulated layer 2 packets on one of the at least two pseudowires; or
- receive encapsulated layer 2 packets comprising respective pseudowire labels having the pseudowire label value from one of the at least two pseudowires, extract each one of the layer 2 packets by removing the pseudowire label and forward the extracted layer 2 packets to a destination user of the virtual private LAN service.

Preferably, the at least one intermediate virtual switch instance is configured to:
- receive encapsulated layer 2 packets comprising respective pseudowire labels having the pseudowire label value from one of the at least two pseudowires, extract each one of the layer 2 packets by removing the pseudowire label and forward the extracted layer 2 packets to a destination user of the virtual private LAN service; and create copies of the extracted layer 2 packets, encapsulate each one of the copies of the layer 2 packets by adding a pseudowire label having the pseudowire label value and transmit the encapsulated copies of the layer 2 packets on another one of the at least two pseudowires.

Preferably, the label-switched ring network further comprises a circular protection path allocated along a second direction opposite to the first direction, the circular protection path being suitable for providing a shared protection to the at least two pseudowires.

Preferably, the number of nodes are configured to implement a wrapping protection mechanism for protecting the at least two pseudowires using at least a portion of the circular protection path.

Preferably, at least one of the virtual switch instances is configured to, in case of a failure occurring immediately upstream along the first direction, receive encapsulated layer 2 packets from the protection path extract the encapsulated layer 2 packets from the protection path and, based on the pseudowire label value, process the encapsulated layer 2 packets.

According to preferred embodiments, at least one node of the number of nodes is provided with topology information on the ring network.

Preferably, the topology information comprise an ordered list of the number of nodes.

Preferably, the at least one node is further provided with identifiers of nodes at which end virtual switch instances of the virtual private LAN service are provided.

Preferably, the at least one node is further configured to, upon detection of at least two failures occurring in the label-switched ring network:
- determine whether the at least one node is involved in a potential loop, based on the topology information and the identifiers of the nodes at which the end virtual switch instances of the virtual private LAN service are provided;
- in the affirmative, check whether the at least one node is in a switch state; and
- in the affirmative, block encapsulated layer 2 packets comprising the pseudowire label value.

Preferably, at least one node is configured to determine whether the at least one node is involved in a potential loop by determining whether the at least two failures create a network partition comprising the at least one node and at least another node of the number of nodes.

According to preferred embodiments, the at least one node is configured to determine whether the at least one node is involved in a potential loop by determining also whether the least one node and/or the at least another node comprises an intermediate switch instance of the virtual private LAN service.

### Brief description of the drawings

The present invention will become clearer by reading the following detailed description, given by way of example and not of limitation, to be read by referring to the accompanying drawings, wherein:
- Figure 1 schematically shows a ring network according to an embodiment of the present invention, in a failure-free scenario;
- Figure 2 schematically shows the ring network of Figure 1, in a first failure scenario;
- Figure 3 schematically shows the ring network of Figure 1, in a second failure scenario;
- Figure 4 schematically shows the ring network of Figure 1, in a third failure scenario; and
- Figure 5 is a flow chart illustrating the operation of a node of the communication network of Figure 1, according to an advantageous variant.

### Detailed description of preferred embodiments of the invention

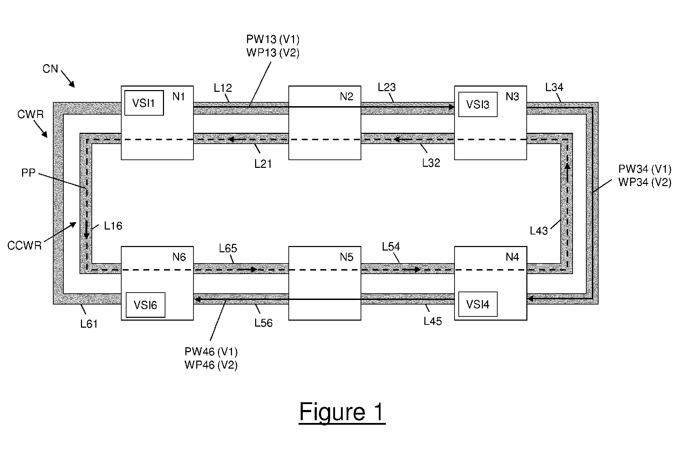

Figure 1 shows a communication network CN according to an embodiment of the present invention. The communication network CN preferably is a label-switched network. More preferably, the communication network CN is an MPLS network or an MPLS-TP network.

The communication network CN preferably comprises a number of nodes connected according to ring topology. In particular, the communication network CN comprises, by way of non limiting example, six nodes N1, N2, N3, N4, N5, N6 connected by six physical unidirectional links (e.g. fiber optics links) L12, L23, L34, L45, L56, L61 forming a clockwise ring CWR and six physical unidirectional links (e.g. fiber optics links) L21, L32, L43, L54, L65, L16 forming a counterclockwise ring CCWR.

The communication network CN preferably supports at least one Layer 2 service. More preferably, the communication network CN supports at least one Virtual Private LAN Service (VPLS). By way of non-limiting example, it is assumed herein after that the communication network CN supports a multipoint-to-multipoint VPLS service (e.g. an E-LAN service) enabling bidirectional exchange of Ethernet packets between four end users connected to the nodes N1, N3, N4 and N6. Accordingly, each node N1, N3, N4, N6 is provided with a respective virtual switch instance VSI1, VSI3, VSI4, VSI6.

Further, a daisy chain of three pseudowires supporting the VPLS service is preferably provided on the clockwise ring CWR, namely a pseudowire PW13 connecting the instances VSI1-VSI3, a pseudowire PW34 connecting the instances VSI3-VSI4 and a pseudowire PW46 connecting the instances VSI4-VSI6. Hence, VSI3 and VSI4 are intermediate virtual switch instances of the VPLS service, whereas VSI1 and VSI6 are end virtual switch instances of the VPLS service. The connection between the instances VSI1, VSI3, VSI4 and VSI6 is preferably bidirectional. However, for simplicity, herein after only the clockwise direction will be considered.

According to embodiments of the present invention, the pseudowires PW13, PW34 and PW46 have associated a same PW label value V1. In other words, according to embodiments of the present invention, a single PW label value V1 is associated to all the daisy-chained PWs carrying a same VPLS service.

Further, preferably, one or more working paths (namely LSPs, in case the communication network CN is either an MPLS or MPLS-TP network) are preferably allocated on the clockwise ring CWR for supporting transmission of the daisy-chained pseudowires PW13, PW34 and PW46. In particular, a working path WP13 is preferably allocated between the nodes N1-N3, a working path WP34 is preferably allocated between the nodes N3-N4, and a working path WP46 is preferably allocated between the nodes N4-N6. Other working paths are preferably allocated on the clockwise ring CWR. Such working paths however will not be considered herein after.

According to embodiments of the present invention, the working paths WP13, WP34 and WP46 have associated a single path label value V2 for each one of their hops. In other words, according to embodiments of the present invention, a single path label value V2 is associated to all the hops of all the working paths suitable for transmitting a daisy chain of pseudowires carrying a same VPLS service. Preferably, the path label value V2 is different from the PW label value V1.

In the communication network CN, a circular protection path PP is preferably allocated on the counterclockwise ring CCWR. The protection path PP provides a shared protection to all the working paths allocated on the clockwise ring CWR, including the working paths WP13, WP34 and WP46 supporting the VPLS service. The protection path PP preferably has associated a set of protection label values (one for each hop). A counter-rotating circular protection path (not shown in the drawings for simplicity) is further allocated on the clockwise ring CWR for providing a shared protection to all the working paths allocated on the counterclockwise ring CCWR.

When the end user connected to the node N1 wishes to transmit Ethernet packets to the end users connected to the nodes N3, N4 and N6 via the VPLS service, the instance VSI1 provided at the node N1 preferably encapsulates each Ethernet packet in a respective label-switched packet (e.g. an MPLS packet) by adding a PW label comprising the PW label value V1 associated to the pseudowire PW13 and a path label comprising the path label value V2 associated to the first hop of the working path WP13. The instance VSI1 then transmits the label-switched packets on the working path WP13.

The intermediate node N2 of the working path WP13 transparently forwards the label-switched packets based on their path label and performs label swapping by replacing the path label value of the received label-switched packets with the path label value associated to the next hop of the working path WP13. However, since all the hops of the working path WP13 have associated a same path label value V2, the label swapping carried out by the node N2 substantially does not change the path label value comprised in the label-switched packets.

As the label-switched packets are received at the node N3, the instance VSI3 extracts the Ethernet packets comprised therein by removing the path label and the PW label. The instance VSI3 then forwards the Ethernet packets to the end user(s) connected to the node N3. Further, the instance VSI3 preferably creates a copy of each received Ethernet packet and encapsulates each copy in a respective label-switched packet by adding a PW label comprising the PW label value V1 associated to the pseudowire PW34 and a path label comprising the path label value V2 associated to the single-hop working path WP34. The instance VSI3 then transmits the label-switched packets on the working path WP34 (or, if such path is not provided, transmission is directly performed on the link L23 at the physical layer).

Since the pseudowire PW34 have associated the same PW label value V1 as the pseudowire PW13, the extraction-duplication-encapsulation operation performed by the intermediate instance VSI3 substantially does not change the PW label value comprised in the label-switched packets carrying the Ethernet packets associated to the VPLS service. Furthermore, since the working path WP34 has associated the same path label value V2 as the working path WP13, this operation changes neither the path label value comprised in the label-switched packets carrying the Ethernet packets associated to the VPLS service.

As the label-switched packets are received at the node N4, the instance VSI4 extracts the Ethernet packets comprised therein by removing the path label and the PW label. The instance VSI4 then forwards the Ethernet packets to the end user(s) connected to the node N4. Further, the instance VSI4 preferably creates a copy of each received Ethernet packet and encapsulates each copy in a respective label-switched packet by adding a PW label comprising the PW label value V1 associated to the pseudowire PW46 and a path label comprising the path label value V2 associated to the first hop of the working path WP46. The instance VSI4 then transmits the label-switched packets on the working path WP46.

Since the pseudowire PW46 has associated the same PW label value V1 as the pseudowires PW13 and PW34, also the extraction-duplication-encapsulation operation performed by the intermediate instance VSI4 substantially does not change the PW label value comprised in the label-switched packets carrying the Ethernet packets associated to the VPLS service. Furthermore, since the working path WP46 has associated the same path label value V2 as the working paths WP13 and WP34, this operation changes neither the path label value comprised in the label-switched packets carrying the Ethernet packets associated to the VPLS service.

The intermediate node N5 of the working path WP46 transparently forwards the label-switched packets based on their path label and perform label swapping by replacing the path label value of the received label-switched packets with the path label value associated to the next hop of the working path WP46. However, since all the hops of the working path WP46 have associated a same path label value V2, the label swapping carried out by the node N5 substantially does not change the path label value comprised in the label-switched packets.

As the label switched packets are received at the node N6, the instance VSI6 extracts the Ethernet packets comprised therein by removing the path label and the PW label. The instance VSI6 then forwards the Ethernet packets to the end user(s) connected to the node N6.

Hence, according to embodiments of the present invention, label-switched packets carrying Ethernet packets associated to the VPLS service preserve both their PW label value and their path label value (provided the PW is mapped on a working path) along the whole daisy-chain of pseudowires.

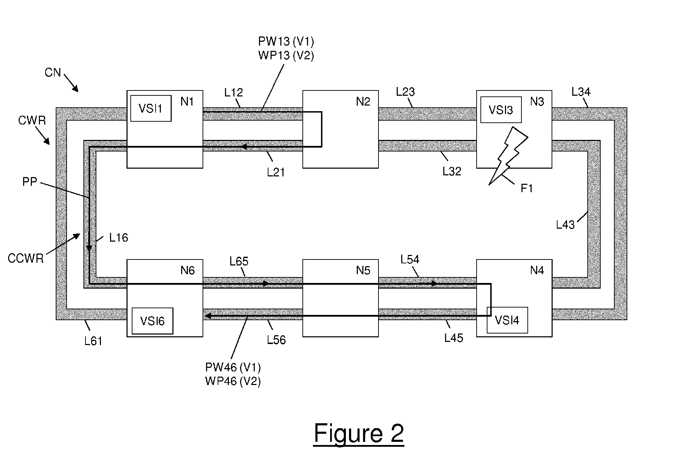

With reference to Figure 2, it is now assumed that a node failure F1 occurs at the node N3, which comprises the intermediate virtual switch instance VSI3. In such case, the communication network CN preferably activates a wrapping protection mechanism for restoring the clockwise connectivity between the nodes N1, N4 and N6.

In particular, as the node N2 located immediately upstream the failure F1 becomes aware of the failure F1, it preferably switches the label-switched packets coming from the working path WP13 to the protection path PP on the counterclockwise ring CCWR. In particular, the node N2 preferably encapsulates the label-switched packets by adding (externally to the path label and PW label already comprised therein) a protection label whose value is associated to the first hop of the protection path PP. The node N2 then preferably transmits the encapsulated label-switched packets along the protection path PP.

The intermediate nodes N1, N6 and N5 of the protection path PP transparently forward the encapsulated label-switched packets based on their protection label and preferably perform label swapping of the protection label.

As the encapsulated label-switched packets are received at the node N4 located immediately downstream the failure F1, the node N4 preferably extracts the label-switched packets from the protection path PP by removing the protection label. The label-switched packets comprise the PW label value V1. This PW label value is associated to all the daisy-chained pseudowires PW13, PW34, PW46 and is accordingly configured at all the nodes comprising a virtual switch instance, in particular the node N4 comprising the virtual switch instance VSI4. Therefore, even if the label-switched packets extracted from the protection path PP come from the pseudowire PW13 (which is not configured as such at the virtual switch instance VSI4), their PW label value V1 is advantageously known to the instance VSI4. Hence, the instance VSI4, based on the PW label value V1 of such label-switched packets, decides to: terminate such packets by extracting the Ethernet packets comprised therein (namely, removal of the path label and PW label); forward the extracted Ethernet packets to the end user(s) connected to the node N4; create a copy of each Ethernet packet; encapsulate each copy in a label-switched packet by adding a PW label comprising the PW label value V1 associated to the pseudowire PW46 and a path label comprising the path label value V2 associated to the first hop of the working path WP46; and transmitting the label-switched packets to the node N6 on the working path WP46. The processing of such packets at the nodes N5 and N6 is as described above. Hence, a detailed description will not be repeated.

Therefore, advantageously, the clockwise connectivity between the nodes N1, N4 and N6 (and in particular between their virtual switch instances VSI1, VSI4 and VSI6) is advantageously restored after the node failure F1 at the node N3. Indeed, by associating a unique PW label value V1 to all the PWs of a same daisy-chain, the virtual switch instances provided at nodes located downstream the failed node are capable of properly switching label-switched packets extracted from the protection path PP and coming from a pseudowire at least partially allocated upstream the failed node. Indeed, the PW label value V1 comprised in such packets is known to all the virtual switch instances supporting the VPLS service. Hence, when a failure occurs at a node at which an intermediate virtual switch instance of the VPLS service is provided (namely, a failure which substantially "splits" the daisy-chain of PWs), the clockwise connectivity between virtual switch instances located upstream the failed node and virtual switch instances located downstream the failed node may be advantageously restored.

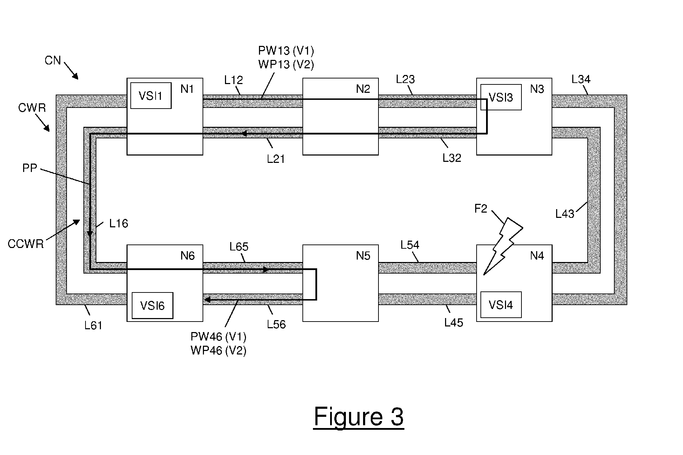

With reference to Figure 3, it is now assumed that a node failure F2 occurs at the node N4, which comprises the intermediate virtual switch instance VSI4. In such case, the communication network CN preferably activates a wrapping protection mechanism for restoring the clockwise connectivity between the nodes N1, N3 and N6.

In particular, as the node N3 located immediately upstream the failure F2 becomes aware of the failure F2, it preferably switches the label-switched packets directed to the working path WP34 to the protection path PP on the counterclockwise ring CCWR. In particular, the node N3 preferably encapsulates the label-switched packets by adding (externally to the path label and PW label already comprised therein) a protection label whose value is associated to the first hop of the protection path PP. The node N3 then preferably transmits the encapsulated label-switched packets along the protection path PP.

The intermediate nodes N2, N1 and N6 of the protection path PP transparently forward the encapsulated label-switched packets based on their protection label and preferably perform label swapping of the protection label.

As the encapsulated label-switched packets are received at the node N5 located immediately downstream the failure F2, the node N5 preferably extracts the label-switched packets from the protection path PP by removing the protection label. The label-switched packets comprise the path label value V2. This path label value is associated to all the hops of all the working paths WP13, WP34, WP46 configured to transmit the daisy-chain of pseudowires PW13, PW34, PW46. Hence, the path label value V2 is configured at all the nodes crossed by any of such working paths, in particular the node N5. Therefore, even if the label-switched packets extracted from the protection path PP come from the working path WP34 (which is not configured as such at the node N5), their path label value V2 is advantageously known to the node N5. Hence, the node N5, based on the path label value V2 of such label-switched packets, decides to switch them on the working path WP46 towards the node N6. The processing of such packets at the node N6 is as described above, the path label value V1 and the PW label value V2 being known also at the node N6. Hence, a detailed description will not be repeated.

Therefore, advantageously, the clockwise connectivity between the nodes N1, N3 and N6 (and in particular between their virtual switch instances VSI1, VSI3 and VSI6) is advantageously restored after the node failure F2 at the node N4. Indeed, by associating a unique path label value V2 to all the hops of all the working paths configured to transmit the daisy-chained PWs of a same VPLS service, the nodes located downstream the failed node are capable of properly switching label-switched packets extracted from the protection path PP and coming from a working path at least partially allocated upstream the failed node. Indeed, the path label value V2 comprised in such packets is known to all the nodes of the network which are crossed by at least one of such working paths. Hence, when a failure occurs at a node at which an intermediate virtual switch instance of the VPLS service is provided (namely, a failure which substantially "splits" the concatenation of PWs), the clockwise connectivity between virtual switch instances located upstream the failed node and virtual switch instances located downstream the failed node may be advantageously restored.

In the communication network CN shown in the drawings, the pseudowires PW13, PW34 and PW46 carrying the VPLS service are transported by respective paths WP13, WP34, WP46. This is however not limiting. Indeed, according to embodiments not shown in the drawings, the pseudowires PW13, PW34 and PW46 may be mapped and transported directed on the physical links L12, L23, L34, L45 and L56 of the communication network, without being encapsulated in any label-switched path. In such case, the Ethernet packets are encapsulated by the virtual switch instances by adding only a PW label. No path label is prepended to the Ethernet packets. Hence, for guaranteeing connectivity between instances located upstream and downstream failures affecting a node at which an intermediate instance reside, only the PW label is subject to the above constraint that its value is the same for all the pseudowires PW13, PW34 and PW46.

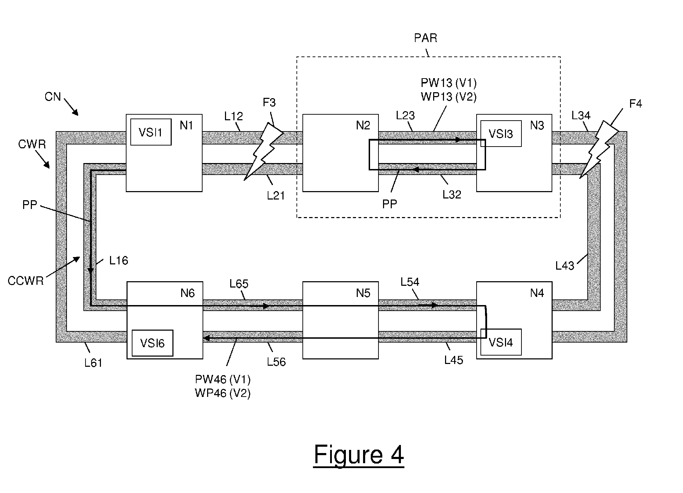

With reference to Figure 4, it is now assumed that two bidirectional link failures F3, F4 occur on the links L12/L21, L34/L43. The failure F3 impairs the working path WP13, whereas the failure F4 impairs the working path WP34. The failures F3, F4 basically split the communication network CN into two partitions, namely: a first partition comprising the nodes N1, N4, N5, N6 and a second partition PAR comprising the nodes N2 and N3.

Also in such case, the communication network CN preferably activates a wrapping protection mechanism for restoring the connectivity between the nodes N1, N4 and N6.

In particular, as the node N1 becomes aware of the failure F3, it preferably switches the label-switched packets directed to the working path WP13 to the protection path PP on the counterclockwise ring CCWR, as described above. The intermediate nodes N6 and N5 of the protection path PP transparently forward the label-switched packets. As the label-switched packets are received at the node N4, the node N4 extracts the label-switched packets from the protection path PP. Then, as described above with reference to Figure 2, its virtual switch instance VSI4, based on the PW label value V1 of such label-switched packets, decides to: terminate such packets by extracting the Ethernet packets comprised therein (namely, removal of the path label and PW label); forward the extracted Ethernet packets to the end user connected to the node N4; create a copy of each Ethernet packet; encapsulate each copy in a label-switched packet by adding a PW label comprising the PW label value V1 associated to the pseudowire PW46 and a path label comprising the path label value V2 associated to the first hop of the working path WP46; and transmitting the label-switched packets to the node N6 on the working path WP46. The processing of such packets at the nodes N5 and N6 is as described above.

Hence, also in this failure scenario, the connectivity between the nodes N1, N4 and N6 (and, in particular, between their virtual switch instances VSI1, VSI4 and VSI6) is advantageously restored. In other words, the first partition of the communication network CN advantageously operates in the proper way.

As to the second partition PAR, the inventors have noticed that, in such failure scenario, an Ethernet loop is disadvantageously established between nodes N2 and N3.

Indeed, as the node N3 receives label-switched packets from the working path WP13, the virtual switch instance VSI3 preferably extracts the Ethernet packets comprised therein and forwards them to the end user of the VPLS service connected to the node N3. The instance VSI3 then creates a copy of each Ethernet packet and encapsulates each copy in a respective label-switched packet to be transmitted to the instance VSI4 along the working path WP34. However, as the instance VSI3 realizes that the working path WP34 is failed, it switches the label-switched packets to the protection path PP, as described above with reference to Figure 3. The label-switched packets are then transmitted to the node N2 along the link L32. As the label-switched packets reach the node N2, the node N2 - which is aware of the failure F3 - extracts the label-switched packets from the protection path PP and switches them back to the working path WP13. The node N3 then receives again the label-switched packets from the node N2 and its instance VSI3 iterates the above procedure, namely: extracts the Ethernet packets, forwards them to the end user connected to the node N3, creates a copy of each Ethernet packet, encapsulates each copy in a respective label-switched packet to be transmitted along the working path WP34 and, since this path is failed, switches such label-switched packets to the protection path PP, which lead them again to the node N2. And so on.

Hence, an Ethernet loop between the nodes N2 and N3 is disadvantageously established, since the instance VSI3 (which is an intermediate instance of the VPLS service) continuously replicates the extracted Ethernet packets received from the node N2, encapsulates them and retransmits them to the node N2 that, due to the failure F3, sends them back to it.

Further, the end user of the VPLS service connected to the node N3 may generate new Ethernet packets addressed to the end user(s) connected to the node N4 and/or N6 (the end user connected to the node N3 may of course transmit Ethernet packets also to the end user connected to the node N1. However, as mentioned above, only the clockwise direction of the connectivity between end users of the VPLS service is considered in the present description). Such Ethernet packets are encapsulated by the instance VSI3 and contribute to feed the loop between N2 and N3.

On the other hand, the inventors have noticed that, if the second partition PAR of the communication network CN did not comprise any virtual switch instance of the service VPLS, no endless Ethernet loop would be established. For instance, if the node N3 did not comprise any virtual switch instance, a temporary loop at the label-switching layer would be established between the nodes N2 and N3, which would however self-extinguish, since none of the nodes N2 and N3 is configured to extract, replicate and re-encapsulate the Ethernet packets. The nodes N2 and N3 would simply switch back and forth label-switched packets, which would be then terminated (namely, discarded) as the value of their Time To Live field (which is decreased by one at each hop between the nodes N2 and N3) expires.

On the other hand, if the second partition of the communication network CN comprised an end virtual switch instance instead of an intermediate virtual switch instance of the service VPLS, no loop would be established because, upon reception of the label-switched packets from the other node, the end virtual switch instance would terminate them and the Ethernet packets comprised therein.

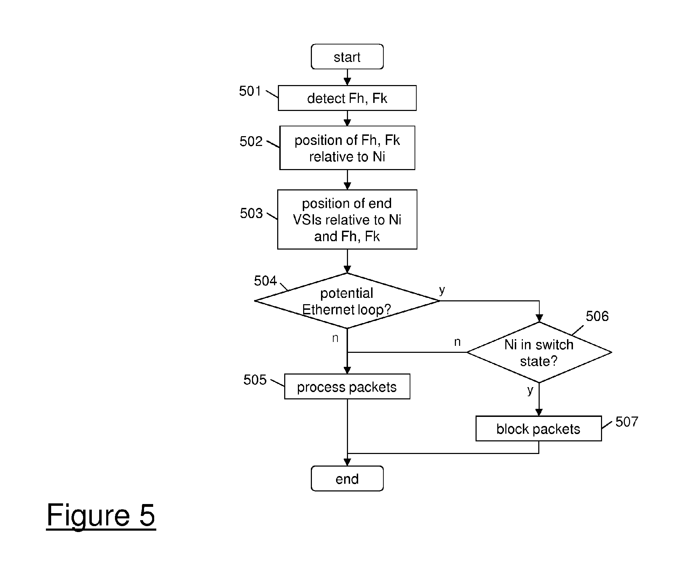

Herein after, with reference to Figure 5, an advantageous variant will be described, which advantageously allows avoiding loops in the failure scenario shown in Figure 4.

According to such advantageous variant, each node Ni (i=1, 2 ... 6) of the communication network CN is provided with topology information on the communication network CN. The topology information preferably comprises an ordered list L = {N1, N2, N3, N4, N5, N6} of the nodes of the network CN. The list L may be ordered either according to the clockwise direction or the counterclockwise direction of the network CN.

Further, each node Ni of the communication network CN is preferably provided with a respective service table STi. The service table STi preferably comprises one row for each VPLS service implemented as a daisy-chain of PWs which crosses the node Ni. For each listed VPLS service, the corresponding row of the table STi comprises:
- an identifier of the VPLS service;
- the identifiers of the nodes at which the end virtual switch instances of that VPLS services are provided; and
- the identifiers of the nodes at which the intermediate virtual switch instances of that VPLS services are provided.

For instance, with reference to the network CN, the service tables ST1, ST3, ST4 and ST6 of the nodes N1, N3, N4 and N6 comprises a row in turn comprising:
- the PW label value V1 associated to all the pseudowires PW13, PE34, PW46 supporting the VPLS service;
- the identifiers of the nodes N1 and N6 which comprise the end virtual switch instances VSI1 and VSI6, respectively; and
- the identifiers of the nodes N3 and N4 which comprise the intermediate virtual switch instances VSI3 and VSI4, respectively.

With reference now to the flow chart of Figure 5, as the node Ni is informed by the signaling protocol running on the communication network CN (e.g. the APS protocol) of the occurrence of at least two failures Fh, Fk in the communication network CN (step 501), the node Ni preferably determines the position of the two failures Fh, Fk relative to its own position. To this purpose, at step 501 the node Ni preferably uses the ordered node list L and the information comprised in the signaling messages (step 502).

Further, based on the information comprised in its service table STi, the node Ni determines also the position of the nodes comprising the end virtual switch instances of the VPLS services listed in the table STi relative to its own position and the position of the failures Fh, Fk (step 503).

Then, based on the information determined at steps 502 and 503, the node Ni determines whether it is involved in a potential loop (step 504). In particular, at step 504, for each VPLS service listed in its service table STi, the node Ni checks whether:
(i) the partition created by the failures Fh, Fk and comprising the node Ni comprises at least another node Nj;
(ii) at least one of the nodes Ni, Nj of the partition comprises an intermediate switch instance of the VPLS service; and
(iii) none of the end virtual switch instances of the VPLS service is comprised in the partition.

If all the three conditions (i), (ii) and (iii) are met, the node Ni determines that it is involved in a potential Ethernet loop for that VPLS service. If at least one of the three conditions (i), (ii) and (iii) is not met, the node Ni determines that it is not involved in any potential Ethernet loop for that VPLS service.

If at step 504 the node Ni determines that it is not involved in any potential Ethernet loop for a given VPLS service, the node Ni preferably continues processing the received label-switched packets carrying traffic of that VPLS service according to the wrapping protection scheme, as described above with reference to Figures 2 to 4 (step 505).

Otherwise, if the node Ni determines that it is involved in a potential Ethernet loop for a given VPLS service, it preferably checks whether it is in switch state (step 506). In other words, at step 506 the node Ni checks whether it is currently configured to encapsulate/extract label-switched packets carrying traffic of that VPLS service on the protection path according to the wrapping protection mechanism.

If the node Ni is not in switch state, the node Ni preferably continues processing the received label-switched packets carrying traffic of that VPLS service according to the wrapping protections scheme, as described above with reference to Figures 2 to 4 (step 505).

Otherwise, the node Ni preferably starts blocking all the received label-switched packets carrying traffic of that VPLS service (step 507). In particular, if the node Ni comprises an intermediate virtual switch instance of the VPLS service, such instance extracts the Ethernet packets from the received label-switched packets and forwards them to the end user connected to it. However, the instance does not replicate and further encapsulate the Ethernet packets. On the other hand, if the node Ni does not comprise any virtual switch instance, at step 507 it preferably identifies the received label-switched packets carrying traffic of the VPLS service based on their path label value V2 and discards them.

This way, the node Ni advantageously prevents the establishment of any endless Ethernet loop of label-switched packets within the partition created by the failures Fh, Fk because, as it becomes aware of a situation of potential loop for a given VPLS service, it starts blocking label-switched packets associated to that VPLS service.

In particular, with reference again to Figure 4, as the node N3 detects the failures F3 and F4, it determines the position of such failures relative to its own position using the ordered node list L (step 501). Further, based on its own service table ST3, the node N3 determines the position of the nodes N1, N6 comprising the end virtual switch instances VSI1, VSI6 of the VPLS service linking the end users connected to the nodes N1, N3, N4 and N6 (step 502) relative to its own position and the position of the failures F3, F4.

Then, the node N3 determines that:
(i) the partition PAR created by the failures F3, F4 and comprising the node N3 itself comprises also the node N2;
(ii) the node N3 itself comprises an intermediate switch instance of the VPLS service; and
(iii) none of the end virtual switch instances VSI1, VSI6 is comprised in the partition PAR.

The node N3 accordingly determines that it is involved in a potential Ethernet loop for the VPLS service. The node N3 further determines that it is in switch state (step 506). Then, as the node N3 receives label-switched packets from the pseudowire PW13, it preferably blocks them (step 507), namely its instance VSI3 extracts the Ethernet packets and forwards them to the end user of the VPLS service connected to the node N3. However, the instance VSI3 does not replicate, encapsulate and forward such packets. This way, no Ethernet loop is established between the node N2 and N3 in the partition PAR.

Also the node N2 performs the above steps 501-504, thereby determining that it is also involved in a potential Ethernet loop. The node N2 also determines that it is in switch state (step 506). The node N2 then also starts blocking label-switched packets associated to the VPLS service and received from the node N3 along the protection path PP, by discarding them (step 507).

Also the nodes N1, N4, N5 and N6 perform the above steps 501-504. However, they determine that they are not involved in a potential Ethernet loop for the VPLS service, since they lie in a partition which comprises the end virtual switch instances VSI1, VSI6 of the VPLS service (condition (iii) above not met). Accordingly, they continue processing the label-switched packets carrying the VPLS service as described above with reference to Figure 4, thereby ensuring connectivity between the nodes N1, N4 and N6.

According to an alternative embodiment, at step 504, for each VPLS service listed in its service table STi, the node Ni checks only the above conditions (i) and (iii), namely it avoids checking whether at least one of the nodes Ni, Nj of the partition comprises an intermediate switch instance of the VPLS service. If the conditions (i) and (iii) are met, the node Ni determines that it is involved in a potential loop for that VPLS service. The node Ni however is not aware of whether the potential loop is either an endless Ethernet loop (which is the case if the partition comprises an intermediate instance of the VPLS service) or a temporary label-switching layer loop (which is the case if the partition does not comprise any intermediate instance of the VPLS service, as described above).

According to such alternative embodiment, if at step 504 the node Ni determines that it is involved in a potential loop for a given VPLS service, it preferably checks whether it is in switch state (step 506) and, in the affirmative, starts blocking all the received label-switched packets carrying traffic of that VPLS service (step 507), even if it is not aware of the loop type (Ethernet or label-switching layer).

Hence, in case the partition comprises an intermediate virtual switch instance of the VPLS service, an Ethernet loop is formed, which is however extinguished within a very short time as described above.

On the other hand, in case the partition does not comprise any intermediate virtual switch instance of the VPLS service, a label-switching layer loop is formed, which is also extinguished within a very short time. Indeed, the node Ni advantageously discards the label-switched packets carrying the VPLS service the first time it receives them. This advantageously prevents such label-switched packets from being transmitted back and forth within the partition until their Time To Live field expires. Hence, the bandwidth of the links within the partition is not wasted for transmitting several times back and forth label-switched packets which shall be terminated.

Even though, in the above description, reference has been made only to clockwise connectivity between the nodes of the communication network CN, the same principles apply also in cases where bidirectional connectivity is provided between the nodes.

In such case, a daisy-chain of bidirectional pseudowires is provided for connecting the virtual switch instances VSI1, VSI3, VSI4, VSI6. Bidirectional working paths are also provided for supporting transmission of such bidirectional pseudowires, while a bidirectional circular protection path is provided for guaranteeing their protection. In such scenario, all the pseudowires preferably have associated a first PW label value V1' for their clockwise direction and a second PW label value V1" for their counterclockwise direction. Similarly, a first path label value V2' is preferably associated to all the hops of all the working paths in the clockwise direction, whereas a second path label value V2" is preferably associated to all the hops of all the working paths in the counterclockwise direction. This way, in case of a node failure at a node comprising an intermediate virtual switch instance of the VPLS service which "splits" the daisy-chain of bidirectional pseudowires, the bidirectional connectivity between all the other virtual switch instances is advantageously guaranteed.

## Claims

1. A label-switched ring network (CN) configured to provide a virtual private LAN service, said label-switched ring network (CN) comprising:
- a number of nodes (N1, N2, N3, N4, N5, N6), at least three nodes (N1, N3, N4, N6) of said number of nodes (N1, N2, N3, N4, N5, N6) being provided with respective virtual switch instances (VSI1, VSI3, VSI4, VSI6) associated to said virtual private LAN service; and
- at least two concatenated pseudowires (PW13, PW34, PW46) for connecting said virtual switch instances (VSI1, VSI3, VSI4, VSI6) along a first direction of said ring network (CN) according to a daisy-chain configuration, said at least two concatenated pseudowires (PW13, PW34, PW46) having associated a same pseudowire label value (V1).

2. The label-switched ring network (CN) according to claim 1, further comprising at least two concatenated label-switched paths (WP12, WP34, WP46) suitable for supporting transmission of said at least two pseudowires (PW13, PW34, PW46), each hop of each one of said at least two label-switched paths (WP12, WP34, WP46) having associated a same path label value (V2).

3. The label-switched ring network (CN) according to claim 2, wherein said path label value (V2) is different from said pseudowire label value (V1).

4. The label-switched ring network (CN) according to any of the preceding claims, said virtual switch instances (VSI1, VSI3, VSI4, VSI6) comprise two end virtual switch instances (VSI1, VSI6) and at least one intermediate virtual switch instance (VSI3, VSI4) of said virtual private LAN service.

5. The label-switched ring network (CN) according to claim 4, wherein at least one of said two end virtual switch instances (VSI1, VSI6) is configured to:
- receive layer 2 packets from an originating user of said virtual private LAN service, encapsulate each one of said layer 2 packets by adding a pseudowire label having said pseudowire label value (V1) and transmit said encapsulated layer 2 packets on one of said at least two pseudowires (PW13, PW34, PW46); or
- receive encapsulated layer 2 packets comprising respective pseudowire labels having said pseudowire label value (V1) from one of said at least two pseudowires (PW13, PW34, PW46), extract each one of said layer 2 packets by removing said pseudowire label and forward said extracted layer 2 packets to a destination user of said virtual private LAN service.

6. The label-switched ring network (CN) according to claim 4 or 5, wherein said at least one intermediate virtual switch instance (VSI3, VSI4) is configured to:
- receive encapsulated layer 2 packets comprising respective pseudowire labels having said pseudowire label value (V1) from one of said at least two pseudowires (PW13, PW34, PW46), extract each one of said layer 2 packets by removing said pseudowire label and forward said extracted layer 2 packets to a destination user of said virtual private LAN service; and
create copies of said extracted layer 2 packets, encapsulate each one of said copies of said layer 2 packets by adding a pseudowire label having said pseudowire label value (V1) and transmit said encapsulated copies of said layer 2 packets on another one of said at least two pseudowires (PW13, PW34, PW46).

7. The label-switched ring network (CN) according to any of the preceding claims, wherein it further comprises a circular protection path (PP) allocated along a second direction opposite to said first direction, said circular protection path (PP) being suitable for providing a shared protection to said at least two pseudowires (PW13, PW34, PW46).

8. The label-switched ring network (CN) according to claim 7, wherein said number of nodes (N1, N2, N3, N4, N5, N6) are configured to implement a wrapping protection mechanism for protecting said at least two pseudowires (PW13, PW34, PW46) using at least a portion of said circular protection path (PP).

9. The label-switched ring network (CN) according to claim 8, wherein at least one of said virtual switch instances (VSI1, VSI3, VSI4, VSI6) is configured to, in case of a failure (F1, F2, F3, F4) occurring immediately upstream along said first direction, receive encapsulated layer 2 packets from said protection path (PP), extract said encapsulated layer 2 packets from said protection path (PP) and, based on said pseudowire label value (V1), process said encapsulated layer 2 packets.

10. The label-switched ring network (CN) according to any of the preceding claims, wherein at least one node (Ni) of said number of nodes (N1, N2, N3, N4, N5, N6) is provided with topology information on said ring network (CN).

11. The label-switched ring network (CN) according to claim 10, wherein said topology information comprise an ordered list of said number of nodes (N1, N2, N3, N4, N5, N6).

12. The label-switched ring network (CN) according to claim 11, wherein said at least one node (Ni) is further provided with identifiers of nodes (N1, N6) at which end virtual switch instances (VSI1, VSI6) of said virtual private LAN service are provided.

13. The label-switched ring network (CN) according to claim 12, wherein said at least one node (Ni) is further configured to, upon detection of at least two failures (Fh, Fk) occurring in said label-switched ring network (CN):
- determine whether said at least one node (Ni) is involved in a potential loop, based on said topology information and said identifiers of said nodes at which said end virtual switch instances (VSI1, VSI6) of said virtual private LAN service are provided;
- in the affirmative, check whether said at least one node (Ni) is in a switch state; and
- in the affirmative, block encapsulated layer 2 packets comprising said pseudowire label value (V1).

14. The label-switched ring network (CN) according to claim 13, wherein said at least one node (Ni) is configured to determine whether said at least one node (Ni) is involved in a potential loop by determining whether said at least two failures (Fh, Fk) create a network partition (PAR) comprising said at least one node (Ni) and at least another node (Nj) of said number of nodes (N1, N2, N3, N4, N5, N6).

15. The label-switched ring network (CN) according to claim 14, wherein said at least one node (Ni) is configured to determine whether said at least one node (Ni) is involved in a potential loop by determining also whether said least one node (Ni) and/or said at least another node (Nj) comprises an intermediate switch instance of said virtual private LAN service.

## Amended claims

### Amended claims in accordance with Rule 137(2) EPC.

**1.** A label-switched ring network (CN) configured to provide a virtual private LAN service, said label-switched ring network (CN) comprising:
- a number of nodes (N1, N2, N3, N4, N5, N6), at least three nodes (N1, N3, N4, N6) of said number of nodes (N1, N2, N3, N4, N5, N6) being provided with respective virtual switch instances (VSI1, VSI3, VSI4, VSI6) associated to said virtual private LAN service; and
- at least two concatenated pseudowires (PW13, PW34, PW46) for connecting said virtual switch instances (VSI1, VSI3, VSI4, VSI6) along a first direction of said ring network (CN) according to a daisy-chain configuration, said at least two concatenated pseudowires (PW13, PW34, PW46) having associated a same pseudowire label value (V1).

**2.** The label-switched ring network (CN) according to claim 1, further comprising at least two concatenated label-switched paths (WP13, WP34, WP46) suitable for supporting transmission of said at least two pseudowires (PW13, PW34, PW46), each hop of each one of said at least two label-switched paths (WP13, WP34, WP46) having associated a same path label value (V2).

**3.** The label-switched ring network (CN) according to claim 2, wherein said path label value (V2) is different from said pseudowire label value (V1).

**4.** The label-switched ring network (CN) according to any of the preceding claims, said virtual switch instances (VSI1, VSI3, VSI4, VSI6) comprise two end virtual switch instances (VSI1, VSI6) and at least one intermediate virtual switch instance (VSI3, VSI4) of said virtual private LAN service.
